Europäisches Patentamt

European Patent Office

Office européen des brevets

(19)

(11) Veröffentlichungsnummer : **0 159 016**
**B1**

(12)

# EUROPÄISCHE PATENTSCHRIFT

(45) Veröffentlichungstag der Patentschrift :
17.05.89

(21) Anmeldenummer : 85104595.5

(22) Anmeldetag : 16.04.85

(51) Int. Cl.⁴ : F 16 B 35/04

(54) Schraube, insbesondere Holzschraube.

(30) Priorität : 19.04.84 DE 8412344 U
10.07.84 DE 3425380

(43) Veröffentlichungstag der Anmeldung :
23.10.85 Patentblatt 85/43

(45) Bekanntmachung des Hinweises auf die Patenterteilung : 17.05.89 Patentblatt 89/20

(84) Benannte Vertragsstaaten :
AT BE CH FR GB IT LI LU NL SE

(56) Entgegenhaltungen :
US–A– 2 016 610
US–A– 2 024 071

(73) Patentinhaber : Gietl, Hans, jun.
Rodinger Strasse 1
D-8490 Cham-Janahof (DE)

(72) Erfinder : Gietl, Hans, jun.
Rodinger Strasse 1
D-8490 Cham-Janahof (DE)

(74) Vertreter : Graf, Helmut, Dipl.-Ing. et al
Patentanwälte Dipl.-Ing. A. Wasmeier Dipl.-Ing. H.
Graf Greflinger Strasse 7 Postfach 382
D-8400 Regensburg (DE)

## Beschreibung

Die Erfindung bezieht sich auf eine Holzschraube zum Anschrauben eines Elementes an einem tragenden Untergrund, deren Schraubenschaft aus einem ersten, mit einem Gewinde versehenen und bis zu dem einen Ende der Schraube reichenden Schaftabschnitt, der in den tragenden Untergrund eingreift, sowie aus einem gewindelosen zweiten Schaftabschnitt besteht, der in den Schraubenkopf übergeht und das Element durchdringt.

Weiterhin bezieht sich die Erfindung auf eine Schraubverbindung zum Befestigen eines Elementes an einem tragenden Untergrund unter Verwendung einer Holzschraube der vorgenannten Art.

Holzschrauben sind in verschiedenen Ausführungen bekannt.

Vielfach besteht beim Anschrauben von Elementen an einem tragenden Unter- oder Hintergrund (z. B. an Balken, an Rahmen, an mit Dübeln versehenen Wänden usw.) das Problem, daß die Elemente nach dem Anschrauben beispielsweise mit ihrer senkrecht oder nahezu senkrecht zu den Achsen der verwendeten Holzschrauben verlaufenden Außenfläche in einer gemeinsamen Ebene, d. h. fluchtend miteinander liegen sollen, was vielfach wegen Toleranzen in den Abmessungen der verwendeten Materialien sowie wegen der unvermeidlichen Toleranzen bei der Montage nicht ohne weiteres erreicht werden kann.

Bekannt sind weiterhin Maschinenschrauben zum Befestigen von Holzteilen an Winkelprofilen eines Metallrahmens (US-A 20 16 610 und US-A 20 24 071), wobei diese bekannten Maschinenschrauben aus einem ersten, mit einem Gewinde für eine Mutter versehenen und bis zu dem einen Ende der Maschinenschraube reichenden Schaftabschnitt sowie aus einem gewindelosen zweiten Schaftabschnitt bestehen, welch letzterer in einem stirnseitig abgerundeten und nicht den bei Holzschrauben üblichen Schraubenzieherschlitz aufweisenden Schraubenkopf übergeht. An dem zweiten Schaftabschnitt sind bei diesen bekannten Maschinenschrauben jeweils mehrere ringförmige, konzentrisch zur Achse des Schraubenschaftes angeordnete Vorsprünge vorgesehen. Die Befestigung eines Holzelementes an dem Metallrahmen ist unter Verwendung dieser bekannten Maschinenschrauben dadurch hergestellt, daß die jeweilige, mit ihrem Schraubenkopf gegen die den Metallrahmen abgewendete Oberflächenseite des Elementes aus Holz anliegende Maschinenschraube mit ihrem zweiten Schaftabschnitt das Element aus Holz (im Bereich einer dort vorgesehenen Bohrung) durchdringt und mit ihrem ersten Schaftabschnitt frei durch eine Bohrung des betreffenden Winkelprofils des Metallrahmens hindurchgeführt ist, wobei auf das aus der Bohrung des Winkelprofils vorstehende Ende des ersten Schaftabschnittes bzw. auf das dortige Gewinde eine Gewindemutter aufgeschraubt ist. Die am zweiten Schaftabschnitt vorgesehenen Vorsprünge sind in das Material des Elementes aus Holz eingedrückt, wodurch insbesondere eine Abdichtung gegen Wasser und Feuchtigkeit dort erreicht werden soll, wo die betreffende Maschinenschraube das Element aus Holz durchdringt. Auch bei unter Verwendung dieser bekannten Maschinenschrauben hergestellten Schraubverbindungen läßt sich nicht ohne weiteres, d. h. ohne Verwendung weiterer zusätzlicher Elemente (wie Unterlegscheiben usw.) bei Toleranzen beispielsweise in der Dicke der Elemente aus Holz erreichen, daß alle diese Elemente mit ihrer Außenfläche in einer gemeinsamen Ebene fluchtend miteinander liegen.

Der Erfindung liegt die Aufgabe zugrunde, eine Holzschraube bzw. eine unter Verwendung einer solchen Schraube hergestellte Schraubverbindung aufzuzeigen, mit der es möglich ist, nach dem Festziehen dieser Holzschraube das betreffende, von der Holzschraube gehaltene Element durch geringfügiges Drehen der Holzschraube im Sinne eines Lockerns in Richtung der Schraubenachse einzustellen, ohne daß dadurch die Qualität der Schraubverbindung beeinträchtigt wird.

Zur Lösung dieser Aufgabe ist erfindungsgemäß eine Holzschraube der eingangs geschilderten Art so ausgebildet, daß an dem zweiten Schaftabschnitt wenigstens ein ringförmiger, konzentrisch zur Achse des Schraubenschaftes angeordneter Vorsprung vorgesehen ist, wobei das Element durch Drehen der Holzschraube in einen Abstand zum tragenden Untergrund gebracht werden kann, bzw. ist erfindungsgemäß eine Schraubverbindung unter Verwendung einer solchen Holzschraube ausgeführt.

Beim Eindrehen der Schraube drückt sich der wenigstens eine ringförmige Vorsprung seitlich in das Material des mit der Schraube zu befestigenden Elementes ein, so daß die Schraube dann mit Hilfe des ringförmigen Vorsprunges in dem zu befestigenden Element in Achsrichtung unverschiebbar gehalten ist. Hierdurch ist es dann möglich, die einmal festgezogene Schraube zum Ausgleich bzw. zur Justierung des mit der Schraube gehaltenen Elementes (im Sinne eines Lockerns, aber ohne Beeinträchtigung der Qualität der Schraubenverbindung) zurückzudrehen, wodurch das Element zusammen mit der Schraube gegenüber dem das Gewinde dieser Schraube aufnehmenden tragenden Unter- oder Hintergrund bewegt und dadurch eine Einstellung des Elementes relativ zum Untergrund möglich wird, ohne daß eine Lockerung der Schraubenverbindung eintritt. Wesentlich für diese Einstellung ist somit auch, daß die Holzschraube mit ihrem am ersten Schaftabschnitt vorgesehenen Gewinde in den Untergrund eingreift.

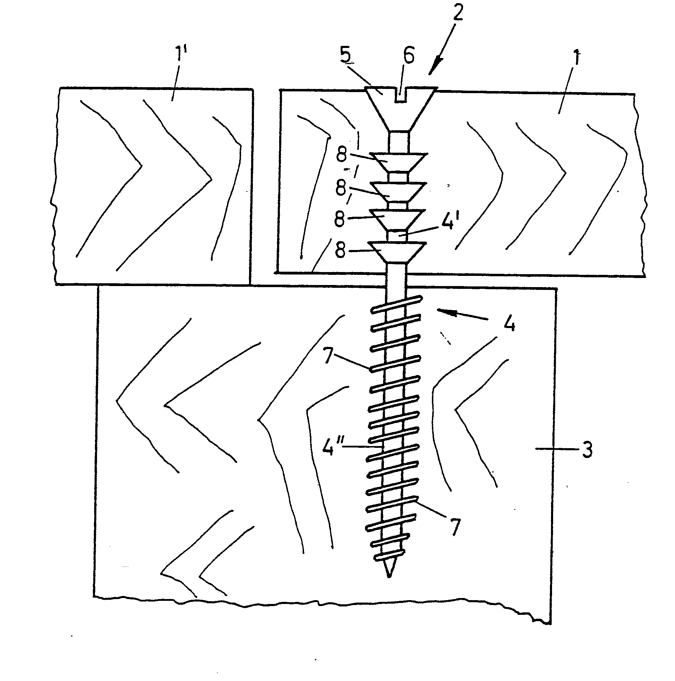

Weiterbildungen der Erfindung sind Gegenstand der Unteransprüche. Die Erfindung wird im folgenden anhand der Figur, die eine erfindungsgemäße Holzschraube in Seitenansicht zeigt, näher erläutert.

In der Figur ist 1 ein Element aus Holz, z. B. eine Holzlatte, die mit Hilfe einer erfindungsgemäßen Holzschraube 2 an einem Holzbalken 3 gehalten ist. Die aus Metall, beispielsweise aus Stahl, Messing usw. gefertigte Holzschraube 2 besteht aus einem Schraubenschaft 4, der an einem Ende in den als Senkkopf ausgebildeten Schraubenkopf 5 übergeht. Der Schraubenkopf 5 ist mit einem Schraubenzieherschlitz 6 ausgebildet, der beispielsweise auch die Form eines Kreuzschlitzes aufweisen kann.

Der Schraubenschaft 4 besteht aus zwei Abschnitten 4' und 4", von denen der dem Schraubenkopf 5 entfernt liegende und das andere Ende der Holzschraube 2 bildende Schaftabschnitt 4" mit einem Gewinde 7 versehen ist. Der gewindelose Schaftabschnitt 4', der zwischen dem Gewinde 7 bzw. dem Schaftabschnitt 4" und dem Schraubenkopf 5 liegt, weist einen kreiszylinderförmigen Querschnitt auf, der kleiner ist als der maximale Außenquerschnitt des Gewindes 7 am Schaftabschnitt 4". Bei der dargestellten Ausführungsform sind an dem Schaftabschnitt 4' vier ringartige, über die Umfangsfläche des Schaftabschnittes 4' vorstehende und in sich geschlossene ringartige Vorsprünge 8 vorgesehen, die jeweils konzentrisch zur Achse des Schraubenschaftes 4 liegen und in gleichmäßigen Abständen nebeneinander in Längsrichtung des Schraubenschaftes 4 angeordnet sind. Die Vorsprünge 8 sind bei der dargestellten Ausführungsform jeweils kegelstumpfförmig ausgebildet und so angeordnet, daß sie mit ihrer sich kegelstumpfförmig verjüngenden Seite dem mit dem Gewinde 7 versehenen Schaftabschnitt 4" zugewendet sind.

Zum Befestigen eines Elementes, z. B. der Holzlatte 1 an einem anderen Element, z. B. an dem Holzbalken 3 wird die Holzschraube 2 in üblicher Weise mit Hilfe eines Schraubenziehers in vorgebohrte Löcher in der Holzlatte 1 sowie ggf. im Holzbalken 3 derart eingedreht, daß der mit dem Gewinde 7 versehene Schaftabschnitt 4" im Holzbalken 3 gehalten ist, während der gewindelose Schaftabschnitt 4' von der Holzlatte 1 aufgenommen ist. Das Eindrehen der Holzschraube 2 ist beendet, sobald die Holzlatte 1 fest gegen den Holzbalken 3 angepreßt ist, wobei dann auch der Schraubenkopf 5 fest gegen die Holzlatte 1 bzw. gegen eine dort vorbereitete Senkbohrung anliegt. Die Vorsprünge 8, deren Außendurchmesser größer ist als der maximale Außendurchmesser des Gewindes 7 drücken sich beim Eindrehen der Holzschraube 2 seitlich in das Material der Holzlatte 1 ein.

Soll nun die dem Holzbalken 3 abgewendete Seite der Holzlatte 1 fluchten mit einer ebenfalls dem Holzbalken 3 abgewendeten Seite eines weiteren Elementes 1' liegen, und stellt sich heraus, daß dies nach dem Festdrehen der Holzschraube 2 nicht der Fall ist, da die dem Holzbalken 3 abgewendete Oberflächenseite der Holzlatte 1 dem Holzbalken 3 näherliegt als die entsprechende Seite des Elementes 1', so kann die Holzschraube im Sinne eines Lockerns soweit zurückgedreht werden, bis beide Oberflächenseiten in einer Ebene liegen. Durch die Vorsprünge 8, die sich in das Material der Holzlatte 1 eingedrückt hatten, ist dabei sichergestellt, daß die Holzschraube 2 bzw. deren Schraubenschaft 4 in der Holzlatte 1 zwar drehbar, jedoch axial nicht verschiebbar gehalten ist, so daß beim Zurückdrehen der Holzschraube 2 eine feste Anlage des Schraubenkopfes 5 an der Holzlatte 1 aufrechterhalten bleibt. Durch die Vorsprünge 8 ist die Holzlatte 1 auch nach wie vor über die Holzschraube 2 fest und vorallem auch rüttelfest am Holzbalken 3 gehalten. Da die Vorsprünge 8 einen Außendurchmesser aufweisen, der größer ist als der maximale Außendurchmesser des Gewindes 7 ist weiterhin sichergestellt, daß sich die Vorsprünge 8 beim Eindrehen der Holzschraube 2 genügend tief in durch das Vorbohren der Holzlatte 1 bzw. durch das Gewinde 7 nicht beeinträchtigtes Material der Holzlatte 1 eindrücken können.

Die Länge des Schraubenschaftabschnittes 4' ist vorzugsweise gleich oder größer als die Dicke der Holzlatte 1 in Richtung der Längserstreckung der Holzschraube 2, so daß das Gewinde 7 ausschließlich in den Holzbalken 3 eingreift.

**Patentansprüche**

1. Holzschraube (2) zum Anschrauben eines Elementes (1) an einem tragenden Untergrund (3), deren Schraubenschaft (4) aus einem ersten, mit einem Gewinde versehenen und bis zu dem einen Ende der Schraube reichenden Schaftabschnitt (4"), der in den tragenden Untergrund eingreift, sowie aus einem gewindelosen weiten Schaftabschnitt (4') besteht, der in den Schraubenkopf (5) übergeht und das Element durchdringt, dadurch gekennzeichnet, daß an dem zweiten Schaftabschnitt (4') wenigsten ein ringförmiger, konzentrisch zur Achse des Schraubenschaftes (4) angeordneter Vorsprung (8) vorgesehen ist, wobei das Element (1) durch Drehen der Holzschraube (2) in einen Abstand zum tragenden Untergrund (3) gebracht werden kann.

2. Holzschraube nach Anspruch 1, dadurch gekennzeichnet, daß der zweite Schaftabschnitt (4') einen Querschnitt aufweist, der kleiner ist als der maximale Querschnitt des mit dem Gewinde (7) versehenen ersten Schaftabschnittes (4"), und daß der wenigstens eine Vorsprung (8) einen maximalen Außendurchmesser aufweist, der größer ist als der maximale Außendurchmesser des mit dem Gewinde (7) versehenen ersten Schaftabschnittes (4").

3. Holzschraube nach Anspruch 1 oder 2, dadurch gekennzeichnet, daß der wenigstens eine Vorsprung (8) kegelstumpfförmig ausgebildet ist.

4. Holzschraube nach Anspruch 3, dadurch gekennzeichnet, daß die sich kegelstumpfförmig verjüngende Seite des wenigstens einen Vorsprungs (8) dem Schraubenkopf (5) abgewendet ist.

5. Holzschraube nach einem der Ansprüche 1 bis 4, dadurch gekennzeichnet, daß an dem zweiten Schaftabschnitt (4') zwei oder mehr Vorsprünge (8) vorgesehen sind.

6. Holzschraube nach einem der Ansprüche 1 bis 5, dadurch gekennzeichnet, daß der wenigstens eine Vorsprung (8) einen Außendurchmesser aufweist, der mindestens gleich dem maximalen Außendurchmesser des mit dem Gewinde (7) versehenen Schaftabschnittes (4″) ist.

7. Schraubverbindung zum Befestigen eines Elementes an einem tragenden Untergrund unter Verwendung der Holzschraube nach einem der Ansprüche 1 bis 6.

**Claims**

1. A wood screw (2) for screwing a member (1) to a supporting under-part (3), the shank (4) of which comprises a first section (4″), which is provided with a thread and extends as far as one end of the screw and which engages in the supporting under-part, and a thread-less second section (4′), which passes into the screw head (5) and penetrates the member, characterized in that at least one annular projection (8) arranged concentrically to the axis of the screw shank (4) is provided on the second shank section (4′), it being possible, by turning the wood screw (2), for the member (1) to be moved to a distance from the supporting under-part (3).

2. A wood screw according to claim 1 characterized in that the second shank section (4′) has a cross-section which is smaller than the maximum crosssection of the first shank section (4″) provided with the thread (7), and the projection (8), of which there is at least one, has a maximum external diameter which is greater than the maximum external diameter of the first shank section (4″) provided with the thread (7).

3. A wood screw according to Claim 1 or 2, characterized in that the at least one projection (8) is made frustoconical.

4. A wood screw according to Claim 3, characterized in that the frustoconically tapering side of the at least one projection (8) faces away from the screw head (5).

5. A wood screw according to any one of Claims 1 to 4, characterized in that two or more projections (8) are provided on the second shank section (4′).

6. A wood screw according to any one of Claims 1 to 5, characterized in that the at least one projection (8) has an external diameter which is at least equal to the maximum external diameter of the shank section (4″) provided with the thread (7).

7. A screw connexion for securing a member to a supporting under-part using the wood screw according to any one of Claims 1 to 6.

**Revendications**

1. Vis à bois (2) pour le vissage d'un élément (1) sur une base de support (3), dont la tige de vis (4) est constituée d'un premier tronçon (4″) comportant un filetage et allant jusqu'à l'une des extrémités de la vis, qui s'engage dans la base de support, ainsi que d'un deuxième tronçon (4′) sans filetage, qui se termine par la tête de vis (5) et traverse l'élément précité, caractérisée en ce qu'on prévoit au deuxième tronçon de tige (4′) au moins une partie annulaire en saillie (8), disposée concentriquement à l'axe de la tige de vis (4), l'élément (1) pouvant être amené à une certaine distance de la base de support (3) par rotation de la vis à bois (2).

2. Vis à bois selon la revendication 1 caractérisé en ce que le deuxième tronçon de tige (4′) présente une section transversale inférieure à la section transversale maximale du premier tronçon de tige (4″) muni d'un filetage (7) et en ce que la ou les parties en saillie (8) (une au moins) présentent un diamètre extérieur maximal qui est supérieur au diamètre extérieur maximal du premier tronçon de tige (4″) comportant le filetage (7).

3. Vis à bois selon la revendication 1 ou 2 caractérisée en ce que la partie en saillie (8) (une au moins) présente une forme tronconique.

4. Vis à bois selon la revendication 3 caractérisée en ce que le côté réduit du tronc de cône de la partie en saillie (8) (une au moins) est non en regard de la tête de vis (5).

5. Vis à bois selon l'une des revendications 1 à 4 caractérisée en ce qu'on prévoit deux ou plusieurs parties en saillie (8) sur le deuxième tronçon de tige (4′).

6. Vis à bois selon l'une des revendications 1 à 3 caractérisée en ce que la partie en saillie (8) (une au moins) présente un diamètre extérieur qui est au moins égal au diamètre extérieur maximal du tronçon de tige (4″) comportant le filetage (7).

7. Assemblage par vis pour la fixation d'un élément sur une base de support par utilisation de la vis à bois selon l'une des revendications 1 à 6.